# FASCICULE DE BREVET EUROPEEN

(11) **EP 3 291 963 B1**
(45) Date de publication et mention de la délivrance du brevet: **22.07.2020**
(21) Numéro de dépôt: 16726134.6
(22) Date de dépôt: 06.05.2016
(51) Int. Cl.: B29C 51/16, B29C 51/30, B29C 51/10, B29C 51/22, B29C 51/04

(54) **DISPOSITIF ET PROCEDE POUR FABRIQUER PAR THERMOFORMAGE DES RECIPIENTS POURVUS DE BANDEROLES DE DECOR.**
VORRICHTUNG UND VERFAHREN ZUR HERSTELLUNG VON BEHÄLTERN MIT DEKORSTREIFEN MITTELS THERMOFORMEN
DEVICE AND METHOD FOR PRODUCING CONTAINERS PROVIDED WITH DECORATIVE STRIPS BY THERMOFORMING

(30) Priorité: 07.05.2015 FR 1554138
(43) Date de publication de la demande: 14.03.2018
(73) Titulaire: ERCA, 91940 Les Ulis (FR)
(72) Inventeur: LUC, Michel, 77390 Chaumes-en-brie (FR)
(74) Mandataire: Cabinet Beau de Loménie
(86) Numéro de dépôt international: PCT/FR2016/051071
(87) Numéro de publication internationale: WO 2016/177986

(56) Documents cités:
- EP-A2- 0 132 776
- WO-A1-2010/125536
- DE-A1-102012 204 511
- FR-A1- 2 342 145
- FR-A1- 2 528 349
- FR-A2- 2 340 185

## Description

La présente description concerne un dispositif pour fabriquer par thermoformage des récipients pourvus de banderoles de décor, le dispositif comprenant un bloc de moule présentant au moins une chambre de thermoformage ayant une surface interne, une ouverture axiale et un fond mobile, opposé à l'ouverture.

On connait par ailleurs, par les documents FR 2 340 185, FR 2 342 145 et FR 2 528 349, des dispositifs du type précité, ayant un bloc d'introduction de banderoles disposé de l'autre côté du bloc de moule par rapport à l'ouverture axiale, pour introduire les banderoles par le fond de la chambre de thermoformage qui, à cet effet, présente une fente d'introduction ou analogue. Ces dispositifs connus ont des cinématiques particulières, et sont adaptés à des configurations particulières, permettant l'acheminement des banderoles sous le bloc de moule et disposant d'un dégagement suffisant sous ce bloc de moule.

La présente description se rapporte quant à elle à un dispositif comprenant un bloc d'introduction de banderoles ayant au moins une chambre d'introduction de banderole et un piston mobile dans la chambre d'introduction de banderole pour pousser une banderole de décor dans la chambre de thermoformage à travers ladite ouverture axiale.

En particulier, l'ouverture axiale sert également à l'introduction de la matière thermoplastique dans la chambre lors du thermoformage.

Un dispositif de ce type est connu par le brevet EP 2 621 708. Dans ce dispositif connu, une partie de fond est mobile entre une position de positionnement de banderoles dans laquelle elle forme, à l'intérieur de la chambre, un épaulement apte à recevoir l'extrémité inférieure d'une banderole mise en place dans la chambre pour bien définir la position de cette banderole, et une position de thermoformage, dans laquelle cet épaulement est effacé. Dans ce brevet antérieur, cette partie de fond est formée par deux pièces mobiles en va-et-vient transversalement à la direction de thermoformage. Ce dispositif donne satisfaction, mais sa cinématique est relativement complexe du fait de la nécessité de réaliser le déplacement des deux parties du fond transversalement à la direction de thermoformage, c'est-à-dire à la direction dans laquelle s'opèrent en général les autres déplacements.

Un autre dispositif du type précité est connu par le brevet FR 2 986 176. Dans ce document, le dispositif comprend une pièce mobile de fond de moule et au moins un organe rétractable. Cette pièce mobile de fond de moule se déplace, selon la direction de thermoformage, entre une position fermée contre le corps principal de cette chambre et une position ouverte. Dans la position fermée, l'organe rétractable est rétracté, tandis que, dans la position ouverte, l'organe rétractable forme une butée d'arrêt pour l'extrémité inférieure d'une banderole introduite dans la chambre. La rétraction de l'organe rétractable peut être automatique grâce à des surfaces de came correctement aménagées entre le corps principal de la chambre et la pièce mobile de fond. D'autre part, il peut être nécessaire de prévoir un ressort ou analogue pour, en position ouverte, faire dépasser l'organe rétractable à l'intérieur de la chambre de thermoformage. Le dispositif donne également satisfaction, mais il présente également une cinématique relativement complexe et nécessite une très grande précision de fabrication pour assurer convenablement la rétractation de l'organe rétractable.

DE102012204511 A1 divulgue un dispositif et un procédé pour fabriquer par thermoformage des récipients pourvus de banderoles de décor selon le préambule de la revendication 1.

FR2340185A2, FR2342145A1 et FR2528349A1 divulguent des dispositifs et procédés pour fabriquer par thermoformage des récipients pourvus de banderoles de décor avec au moins un ensemble de rainurage comprenant une ailette du fond engagée dans une entaille de la surface interne du tronçon d'extrémité.

Les deux dispositifs antérieurs qui viennent d'être évoqués présentent l'avantage de permettre la fabrication d'un récipient exempt d'épaulement au niveau du bord inférieur de la banderole, c'est-à-dire le bord de la banderole qui est tourné vers le fond du récipient. En effet, la présence d'un tel épaulement peut, au-delà de l'aspect purement esthétique, provoquer des zones de faiblesses du récipient si la matière thermoplastique ne s'étire pas convenablement dans la zone de l'épaulement, lors de la fabrication du récipient.

La présente description vise à proposer un dispositif permettant également de fabriquer les récipients munis de banderoles et sensiblement exempts d'épaulement au niveau du bord inférieur de la banderole, le dispositif surmontant sensiblement les inconvénients évoqués ci-dessus à l'égard du dispositif de l'art antérieur.

Ce but est atteint grâce aux caractéristiques des revendications 1 et 10.

Ce dispositif est extrêmement simple, tant par sa structure que par sa cinématique. D'une part, le déplacement du fond entre les niveaux haut et bas est simple du point de vue de la cinématique et de la structure des pièces concernées. D'autre part, il n'est pas nécessaire de prévoir des organes spécifiques qui s'effacent ou s'escamotent dans la position de thermoformage, ce qui évite de compliquer la structure. C'est l'ailette qui porte le bord inférieur de la banderole pour, lorsque le fond atteint le niveau haut de positionnement, placer la banderole dans la position souhaitée. Lorsque le fond est au niveau bas de thermoformage, l'entaille de la surface interne du tronçon d'extrémité est dégagée, et la matière thermoplastique vient donc se plaquer contre son bord de niveau avec la paroi de la chambre. Il s'agit d'une simple entaille dans laquelle il n'est pas nécessaire que la matière thermoplastique pénètre, ou du moins dans laquelle il est inutile de chercher à particulièrement maîtriser la déformation de la matière thermoplastique, de sorte que la présence de l'entaille, contrairement à celle d'un épaulement, n'induit pas de zone de faiblesse dans les corps des récipients thermoformés à l'aide du dispositif. Au contraire, si la matière thermoplastique pénètre dans la ou les entailles, la ou les nervures ainsi créées renforcent les récipients. Ceci est en particulier le cas lorsque l'entaille et la rainure sont strictement parallèles à la direction de thermoformage, auquel cas le déplacement du fond entre le niveau haut de positionnement et le ou les niveaux bas de thermoformage est une simple translation parallèle à la direction de thermoformage.

Lorsque le fond est dans son niveau haut de positionnement, il définit une butée pour le bord inférieur d'une banderole disposée dans la chambre de thermoformage, de sorte que cette banderole peut être placée dans une position parfaitement définie, en vue du thermoformage.

On peut prévoir que le dispositif soit équipé de moyens pour maintenir la banderole dans cette position définie. Ainsi, optionnellement, la surface interne de la chambre comprend une portion d'aspiration située entre le niveau haut et l'ouverture axiale. L'aspiration peut être mise en œuvre alors que la banderole est dans sa position définie, de manière à maintenir cette banderole pour le thermoformage.

Une fois la banderole ainsi positionnée, le fond est déplacé pour être amené au niveau bas de thermoformage, permettant ainsi le thermoformage d'un récipient sans épaulement au niveau du bord inférieur de la banderole.

Optionnellement, l'entaille se termine au niveau haut.

Ainsi, le niveau haut peut être simplement défini par la venue en butée de l'ailette contre le bord supérieur de l'entaille.

Optionnellement, la surface interne du tronçon d'extrémité de la chambre présente de plus grandes dimensions diamétrales au niveau haut qu'au niveau bas et la profondeur de l'entaille, mesurée transversalement, est plus faible au niveau haut qu'au niveau bas.

Ainsi, l'invention est compatible avec la fabrication de récipients dont la paroi latérale est incurvée ou s'évase à partir du fond vers le haut, jusqu'au bord inférieur de la banderole.

Optionnellement, l'ailette dépasse transversalement à partir d'un pourtour du fond dont les dimensions diamétrales sont analogues aux dimensions diamétrales de la surface interne du niveau bas du tronçon d'extrémité dans laquelle est creusée l'entaille.

Ainsi, lorsque le fond de la chambre de thermoformage est au niveau bas précité, la surface interne de la chambre de thermoformage épouse sensiblement le pourtour de ce fond. L'entaille est quant à elle dégagée sur la surface interne de la chambre, et peut former une marque discrète sur la paroi du récipient, au voisinage de son fond.

Optionnellement, le dispositif présente une pluralité d'ensembles de rainurage répartis circonférentiellement.

Chaque ensemble de rainurage comporte au moins une ailette et une entaille, et les ailettes des différents ensembles sont réparties circonférentiellement, de manière à pouvoir, lorsque le fond est déplacé vers le niveau de positionnement, porter une banderole sans que celle-ci ne perde son orientation parallèle à l'axe de la chambre de thermoformage.

Optionnellement, l'ensemble de rainurage comprend une multiplicité d'ailettes réparties uniformément sur la circonférence du fond et engagées dans une multiplicité d'entailles réparties uniformément sur la surface interne du tronçon d'extrémité.

Cette disposition présente l'avantage précité à l'égard de la pluralité d'ensemble de rainures réparties circonférientiellement. Elle permet un guidage efficace de la banderole lors de son positionnement, en minimisant les jeux entre le fond et la surface interne de la chambre de thermoformage.

Optionnellement, le fond est apte à occuper plusieurs niveaux bas de thermoformage, pour thermoformer des récipients de différentes profondeurs.

On peut ainsi thermoformer des récipients de différentes contenances avec le même dispositif. En particulier, on peut prévoir un seul niveau haut de positionnement, mais plusieurs niveaux bas de thermoformage, les récipients thermoformés pour les différents niveaux bas de thermoformage ayant des hauteurs différentes entre le bord inférieur de la banderole et le fond du récipient. En prévoyant plusieurs niveaux bas de thermoformage pour un dispositif ayant une multiplicité d'ailettes engagées dans une multiplicité d'entailles réparties uniformément, ces différentes profondeurs de récipients sont compatibles avec le fait que la partie inférieure de la paroi du récipient est incurvée ou évasée. En effet, dans ce cas, lorsque le niveau bas utilisé pour un thermoformage est écarté significativement du niveau de positionnement, les entailles sont découvertes sur une hauteur correspondante à cet écartement, et formeront simplement des marques discrètes sur la partie inférieure de la paroi des récipients.

Par exemple, l'épaisseur d'une ailette est comprise entre 0,3 et 1 mm et est de préférence sensiblement égale à 0,5 mm, et la largeur d'une entaille recevant cette ailette est égale à l'épaisseur de l'ailette, augmentée d'un jeu de l'ordre de 0,1 à 0,3 mm, de préférence sensiblement égal à 0,2 mm.

En utilisant un matériau de thermoformage classique, par exemple du polystyrène (PS), du polypropylène (PP), ou du polytéréphtalate d'éthylène (PET), et des pressions et des températures de thermoformage également classiques, par exemple une pression de 3 à 6 bar et une température de 120 à 170°C selon le matériau thermoplastique choisi, ces dimensions d'ailettes et d'entailles permettent d'obtenir les avantages précités sans que la matière thermoplastique ne pénètre significativement à l'intérieur des entailles.

La description concerne également un procédé pour fabriquer par thermoformage des récipients pourvus de banderoles de décor, en utilisant un bloc de moule comprenant une chambre de thermoformage ayant une surface interne, une ouverture axiale et un fond mobile opposé à l'ouverture, procédé dans lequel on pousse une banderole de décor dans la chambre de thermoformage à travers ladite ouverture axiale et on thermoforme un récipient dans la chambre de thermoformage en repoussant un matériau thermoplastique dans ladite chambre par ladite ouverture axiale.

La présente description vise à proposer un procédé permettant de fabriquer les récipients munis de banderoles et sensiblement exempts d'épaulement au niveau du bord inférieur de la banderole, le procédé surmontant sensiblement les inconvénients évoqués ci-dessus à l'égard des dispositifs de l'art antérieur et de leur mise en œuvre.

Ce but est atteint grâce au fait que avant de thermoformer le récipient dans la chambre de thermoformage, on place le fond dans un niveau haut de positionnement dans un tronçon d'extrémité de la chambre de manière à positionner la banderole dans la chambre de thermoformage en faisant coopérer la banderole avec au moins une ailette du fond engagée dans une entaille de la surface interne du tronçon d'extrémité, puis on place le fond dans un niveau bas de thermoformage pour thermoformer le récipient.

Optionnellement, avant de thermoformer le récipient dans la chambre de thermoformage, on place le fond dans un niveau bas de retrait, on pousse la banderole de décor dans la chambre de thermoformage à travers ladite ouverture axiale jusqu'à ce que le bord de la banderole tourné vers le fond parvienne au niveau de l'ailette, puis on déplace le fond en l'amenant au niveau haut de positionnement de manière à positionner la banderole dans la chambre de thermoformage.

Optionnellement, après avoir positionné la banderole de décor, on maintient la banderole en position contre la surface interne de la chambre de thermoformage, en particulier par aspiration.

Optionnellement on place le fond dans différents niveaux bas de thermoformage, pour thermoformer des récipients de différentes profondeurs.

La description concerne également un récipient thermoformé présentant un corps avec une paroi axiale entourée par une banderole, une ouverture axiale et un fond relié à la paroi axiale par une portion d'extrémité qui s'étend entre le fond et le bord de la banderole tourné vers le fond, dans lequel la portion d'extrémité présente au moins une nervure qui se termine au niveau du bord de la banderole tourné vers le fond et est reliée à la paroi axiale sans épaulement.

Ce récipient est du type pouvant être fabriqué à l'aide du dispositif selon l'invention. Il présente l'avantage de ne pas avoir d'épaulement au niveau du bord inférieur de la banderole tournée vers le fond, et présente seulement au moins une nervure, correspondant à la "au moins une ailette" du dispositif selon l'invention, qui n'est que très peu visible et ne constitue aucune zone de faiblesse pour le récipient. Bien entendu, le nombre de nervures correspond au nombre d'entailles de la chambre de thermoformage et, en particulier, lorsque l'ensemble de rainurage comprend une multiplicité d'ailettes et une multiplicité d'entailles réparties uniformément, la portion d'extrémité du récipient fabriqué dans cette chambre présente elle-même une multiplicité de nervures réparties uniformément, correspondant aux ailettes. Les nervures sont en particulier orientées selon l'axe vertical du récipient.

Optionnellement, la portion d'extrémité présente des dimensions diamétrales au niveau de sa jonction avec le fond, qui sont inférieures à ses dimensions diamétrales au niveau du bord de la banderole tourné vers le fond.

Optionnellement, la portion d'extrémité présente plusieurs nervures réparties circonférentiellement.

L'invention sera bien comprise et ses avantages apparaîtront mieux à la lecture de la description détaillée qui suit, d'un mode de réalisation représenté à titre d'exemple non limitatif. Cette description se réfère aux dessins annexés sur lesquels :
- la figure 1 est une vue générale d'une installation de thermoformage, de remplissage et de scellement de récipients comprenant un dispositif conforme à l'invention ;
- la figure 2 est une vue partielle en perspective du tronçon d'extrémité d'une chambre de thermoformage (avec un arrachement d'une partie de la paroi axiale de la chambre) et de son fond ;
- les figures 2A, 2B et 2C montrent en coupe partielle axiale, la conformation d'une chambre de thermoformage d'un dispositif conforme à l'invention, pour trois positions du fond mobile de cette chambre ;
- la figure 3 montre en perspective un récipient obtenu à l'aide du dispositif de l'invention ;
- les figures 4A, 4B, 4C et 4D sont des vues en coupe partielle axiale d'une chambre de thermoformage d'un dispositif conforme à l'invention, selon une variante de réalisation, les figures 4A, 4B et 4C montrant le fond dans différents niveaux bas de thermoformage, et la figure 4D montrant le fond au niveau haut de positionnement ; et
- les figures 5A, 5B et 5C montrent des récipients obtenus avec la chambre de thermoformage selon la variante de réalisation, respectivement pour les niveaux bas de thermoformage illustrés aux figures 4A, 4B et 4C.

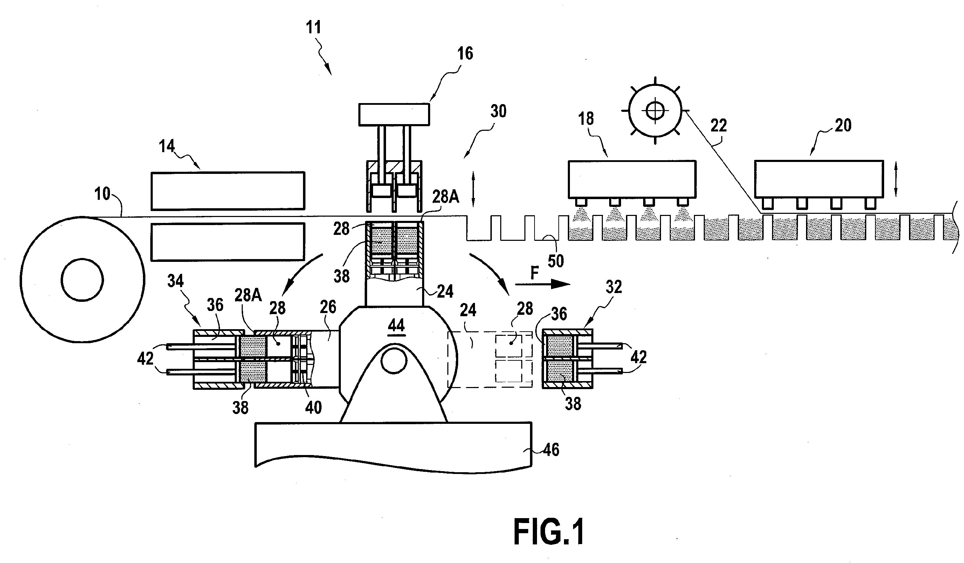

L'installation représentée sur la figure 1 comprend plusieurs stations au travers desquelles est entraînée en pas-à-pas une bande 10 en matériau thermoplastique, par des moyens d'entraînement (non représentés). Considérée successivement dans le sens F d'avancement de la bande, l'installation comprend une station 14 de chauffage, une station 16 de thermoformage, une station 18 de remplissage des récipients thermoformés 50 et une station 20 de fermeture de ces récipients 50 par scellement, au travers de leurs ouvertures, d'une bande de fermeture 22.

Bien entendu, l'invention peut s'appliquer également au thermoformage de récipients dans un matériau thermoplastique se présentant sous une autre forme que celle d'une bande continue, par exemple sous la forme de plaquettes ou de jetons individuels, à partir de chacun desquels un récipient ou un groupe de récipients sont thermoformés. De plus, il peut ne s'agir que d'une installation de thermoformage, sans remplissage, ni fermeture des récipients. En outre, la fermeture peut être réalisée par d'autres moyens que ceux qui sont représentés pour la station 20.

La station de thermoformage 16 illustrée comprend deux blocs de moule 24, 26 qui présentent chacun une pluralité de chambres de thermoformage 28. La station de thermoformage 16 comprend également un bloc de pistons de thermoformage 30, chaque piston étant déplaçable dans une chambre de thermoformage, ainsi que des moyens d'introduction de banderoles de décors dans les chambres de thermoformage. Ces moyens d'introduction comprennent en l'espèce deux blocs 32 et 34 de chambres 36 d'introduction de banderoles de décor 38, ces blocs 32 et 34 étant de préférence orientés dans la direction d'avancement de la bande 10.

En l'espèce, les pistons de thermoformage 30 sont aptes à se déplacer uniquement selon une direction perpendiculaire au sens d'avancement F, soit en l'espèce une direction verticale, le sens d'avancement étant horizontal. Dans l'exemple représenté, chaque bloc de moule est associé à un bloc d'introduction 32 ou 34.

Les blocs de moule 24 et 26 sont en espèce orientés à 90° l'un par rapport à l'autre, et sont portés par un tambour rotatif 44, d'axe horizontal perpendiculaire à la direction d'avancement F, monté sur un support 46. Ainsi, sur la figure 1, le bloc de moule 24 est en position de thermoformage, ses chambres de thermoformage 28 étant alignées avec les pistons 30, tandis que le bloc de moule 26 est en position d'introduction de banderole. En effet, les blocs 32 et 34 d'introduction de banderoles sont disposés de part et d'autre du tambour 44, de telle sorte que les chambres de themoformage du bloc 26 soient alignées avec les chambres 36 du bloc 34 lorsque le bloc 24 est en position de thermoformage, et que les chambres de thermoformage 28 du bloc 24 soient alignées avec les chambres 36 du bloc 32 lorsque c'est le bloc de moule 26 qui est en position de thermoformage.

Dans la situation de la figure 1, comme on l'a indiqué, c'est le bloc de moule 26 qui est en position d'introduction de banderoles. Les chambres 28 sont alignées avec les chambres 36 du bloc 34, dans lesquelles des banderoles 38 ont préalablement été disposées. Des pistons 42 mobiles dans les chambres 36 poussent alors ces banderoles dans les chambres 28 du bloc de moule 26, à travers les ouvertures axiales 28A de ces chambres 28.

On a représenté en trait interrompu la position qu'adopterait le bloc de moule 24 en position d'introduction de banderoles, dans laquelle ses chambres de thermoformage 28 sont alignées avec les chambres 26 du bloc d'introduction 32, de manière à permettre l'introduction de banderoles par poussée à travers les ouvertures 28A des chambres 28.

On voit encore sur la figure 1, bien que sa représentation soit schématique, que les chambres de thermoformage 28 des blocs de moule 24 et 26 comportent des fonds mobiles 40. On comprend que ces fonds sont mobiles en translation en va-et-vient parallèlement à la direction de l'axe des chambres de thermoformage, cette direction étant respectivement verticale lorsque le bloc moule considéré est en position de thermoformage, et horizontale lorsque ce bloc de moule est en position de l'introduction de banderole. Ainsi, lorsque le bloc de moule 24 ou 26 est dans sa position de thermoformage, la direction de déplacement du fond de ses chambres est parallèle à la direction de thermoformage, qui est celle du déplacement des pistons 30 et également celle du déplacement de l'ensemble bloc de moule entre une position haute de thermoformage et une position basse de démoulage des récipients thermoformés.

Dans l'exemple de la figure 1, deux blocs de moules orientés à 90° sont représentés. On pourrait bien entendu utiliser une autre configuration et, par exemple, n'avoir qu'un seul bloc de moule ou au contraire plus de deux blocs de moule, comme représenté dans la demande de brevet européen n° 1 836 040. Par ailleurs, l'utilisation d'un ou plusieurs blocs de moule basculants facilite l'introduction des banderoles dans les chambres, par la même ouverture que celle par laquelle passe le piston de thermoformage. Cependant, on peut imaginer un système différent, par exemple un ou plusieurs blocs de moule déplaçables en translation pour s'écarter du trajet de la bande afin de permettre la mise en place des banderoles dans les chambres de thermoformage, et revenir sous les pistons de thermoformage.

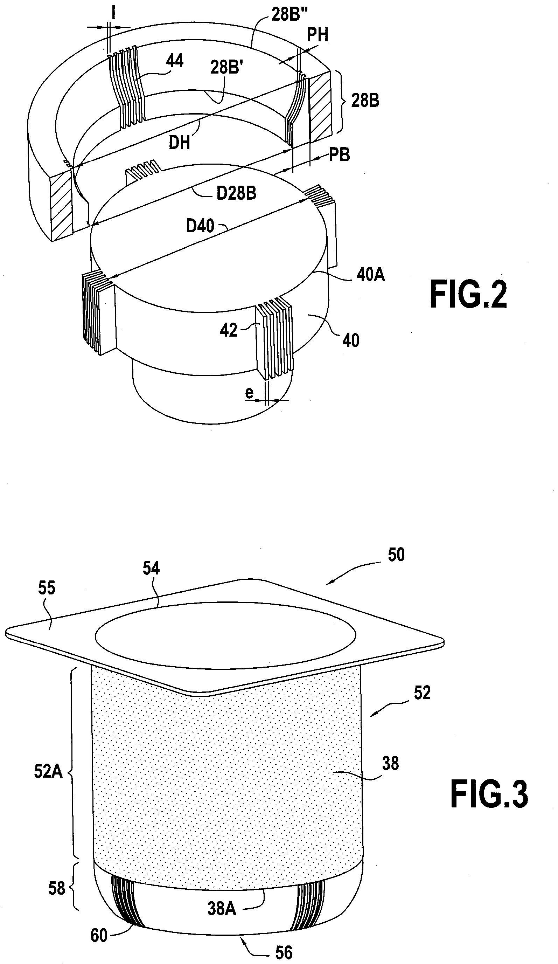

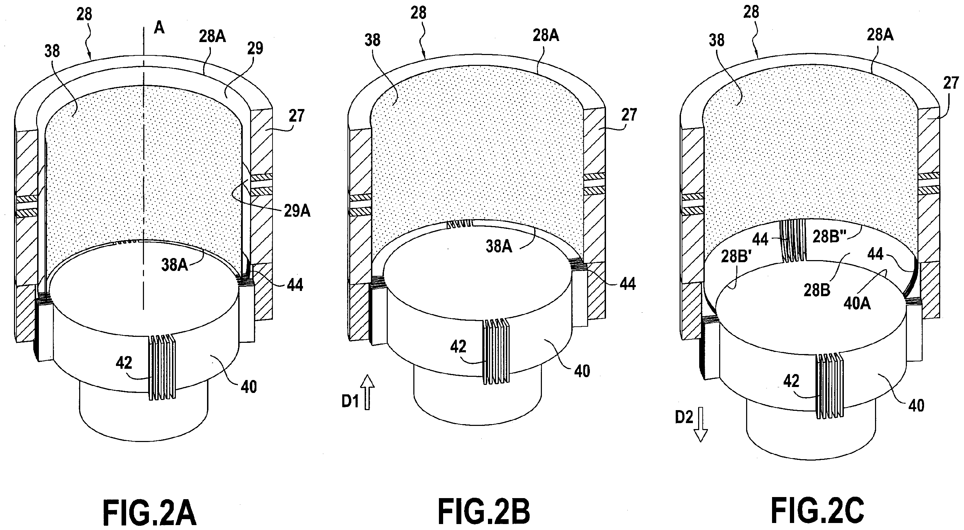

On comprendra mieux la conformation d'une chambre de thermoformage sur la base des figures 2A à 2C. On a en effet représenté sur ces figures une chambre 28, avec son fond mobile 40, une partie de la paroi 27 de la chambre 28 étant arrachée. Une banderole 38 est présente dans la chambre, et est disposée contre sa surface interne 29. On voit sur ces figures, et également sur la figure 2, que la chambre 28 comprend des ensembles de rainurage, comprenant chacun des ailettes 42 formées sur la périphérie externe du fond 40, et des entailles 44 formées sur la surface interne d'un tronçon d'extrémité 28B de la chambre 28 voisin du fond, c'est-à-dire opposé à l'ouverture axiale 28A de la chambre à travers laquelle la banderole 38 a été introduite dans la chambre.

Sur la figure 2, on a simplement représenté, en perspective éclatée, le fond 40 de la chambre et le tronçon d'extrémité 28B de cette dernière dans lequel s'étend l'entaille 44. En fait, dans le mode de réalisation représenté, plusieurs ensembles de rainurages (en l'espèce 4 ensembles de rainurages) sont répartis circonférentiellement. Chacun de ces ensembles comprend en l'espèce cinq ailettes 42 disposées sur la périphérie externe du fond 40, et cinq entailles 44 disposées dans la périphérie interne de la chambre, dans son tronçon d'extrémité 28B. Ces ensembles sont répartis régulièrement, et sont donc espacés les uns par rapport aux autres d'environ 90°. On voit que les ailettes dépassent transversalement à partir d'un pourtour 40A du fond 40 dont les dimensions diamétrales D40 sont analogues aux dimensions diamétrales D28B de la surface interne du niveau bas du tronçon d'extrémité 28B. On voit également que les dimensions diamétrales DH de la surface interne du tronçon d'extrémité 28B au niveau haut 28B" sont plus grandes que ses dimensions diamétrales D28B au niveau bas 28B'. On voit également que la profondeur PB des entailles au niveau bas est plus grande que leur profondeur PH au niveau haut. Ces profondeurs sont mesurées transversalement, c'est-à-dire perpendiculairement à l'axe A de la chambre, qui est également l'axe de déplacement en translation transversale du fond 40, et l'axe de déplacement des pistons de thermoformage 30 lorsque la chambre est en position de thermoformage. L'épaisseur e d'une ailette 42, mesurée circonférentiellement, est comprise entre 0,3 et 1 mm et est de préférence sensiblement égale à 0,5 mm. La largeur l d'une entaille 44, également mesurée circonférentiellement, est égale à l'épaisseur de l'ailette, augmentée d'un jeu de l'ordre de 0,1 à 0,3 mm, de préférence sensiblement égale à 0,2 mm.

La surface interne de la chambre 28 comprend une portion d'aspiration 29A située entre le niveau haut et l'ouverture axiale 28A. De manière connue, cette portion comprend des orifices d'aspiration percés dans la paroi de la chambre et raccordés à une source d'aspiration. Cette portion d'aspiration sert à plaquer la banderole contre la surface interne de la chambre, une fois que la banderole est en position.

On décrit maintenant l'ajustement en position de la banderole 38 dans la chambre 28, en référence aux figures 2A à 2C. Sur la figure 2A, le fond 40 occupe un niveau bas de retrait, la banderole 38 vient d'être insérée dans la chambre 28, par exemple en étant poussée par un piston 42 du type décrit en référence à la figure 1. Ainsi, le bord inférieur 38A de la banderole 38 est en appui contre les ailettes 42. Ensuite, le fond 40 est déplacé vers l'ouverture 28A de la chambre 28 comme indiqué par la flèche D1 de la figure 2B, jusqu'à atteindre son niveau haut de positionnement.

A ce moment, le bord inférieur 38A de la banderole, porté par les ailettes, est placé au niveau souhaité. On voit que ce niveau haut de positionnement est celui où se terminent les entailles 44. En d'autres termes, ce niveau haut est défini par le bord supérieur des entailles 44 contre lequel les ailettes viennent en butée. Alors que la banderole est ainsi correctement mise en place, elle peut être maintenue contre la surface interne 29 de la chambre de thermoformage 28 par tout moyen connu, par exemple par la portion d'aspiration 29A précitée.

Le fond 40 peut alors redescendre dans le sens de la flèche D2 indiqué sur la figure 2C en s'éloignant de l'ouverture 28A de la chambre 28, pour atteindre le niveau bas de thermoformage. C'est dans cette position qu'il est représenté sur la figure 2C. Dans cette position, dans la mesure où, comme on l'a indiqué, le pourtour 40A du fond à partir duquel s'étendent les ailettes 42 à des dimensions diamétrales correspondant à celles du niveau bas 28B' de la chambre, il n'y a pratiquement aucun interstice (abstraction faite des tolérances fonctionnelles) entre le fond 40 et la surface interne 29 de la chambre, ce qui permet un thermoformage sans zone de faiblesse.

La banderole 38 épouse la surface interne de la chambre 28 sans épaulement. Cependant, les entailles 44 présentes dans le tronçon d'extrémité 28B peuvent être partiellement pénétrées par la matière thermoplastique, ce qui peut provoquer la présence de nervures sur la portion d'extrémité des récipients thermoformés dans la chambre.

La figure 3 montre en effet un tel récipient 50 qui présente un corps 52 avec une paroi axiale 52A entourée par une banderole 38, une ouverture axiale 54, qui est en l'espèce bordée par un rebord 55 sur lequel un couvercle ou un opercule pourra être scellé, et un fond 56 relié à la paroi axiale par une portion d'extrémité 58 qui s'étend entre le fond et le bord inférieur 38A de la banderole 38 tourné vers le fond 56. On voit que la portion d'extrémité 58 présente au moins une nervure 60 qui se termine au niveau du bord inférieur 38A de la banderole 38 et qui est reliée à la paroi axiale 52A sans épaulement. En l'espèce, ce récipient a pu être thermoformé dans la chambre qui vient d'être décrite, de sorte que sa portion d'extrémité 58 présentant plusieurs groupes de nervures 60 correspondant aux différents groupes d'ailettes 44 qui ont précédemment été décrits. On voit que la portion d'extrémité 58 présente des dimensions diamétrales au niveau de sa jonction avec le fond 56 qui sont inférieures à ses dimensions diamétrales au niveau du bord inférieur 38A de la banderole.

On a indiqué que la ou les nervures 60 sont reliées à la paroi axiale du récipient sans épaulement. Ceci signifie que, au niveau du bord inférieur 38A de la banderole 38, la face externe de la nervure est aux mêmes dimensions diamétrales que la face externe de la banderole. Bien entendu, dans les renfoncements délimités entre les nervures, de légers épaulements peuvent exister mais ils sont en tout état de cause très faibles et, en réalité, à peine perceptibles puisque la profondeur PH des entailles 44 de la paroi de la chambre de thermoformage est très faible au niveau haut de positionnement. On ne recherche pas que la matière thermoplastique pénètre dans les entailles, de sorte qu'on évite d'étirer localement fortement la matière thermoplastique et, donc, d'affaiblir localement la paroi du récipient.

Sur les figures qui viennent d'être décrites, la chambre 28 et, donc, le corps du récipient, sont globalement cylindriques à base circulaire (abstraction faite, éventuellement, de la forme évasée du tronçon d'extrémité de la chambre et de la portion d'extrémité du corps du récipient). Bien entendu, on pourrait prévoir d'autres formes, en particulier des formes cylindriques à base non circulaire, par exemple une base ovale ou une base carrée à coins arrondis.

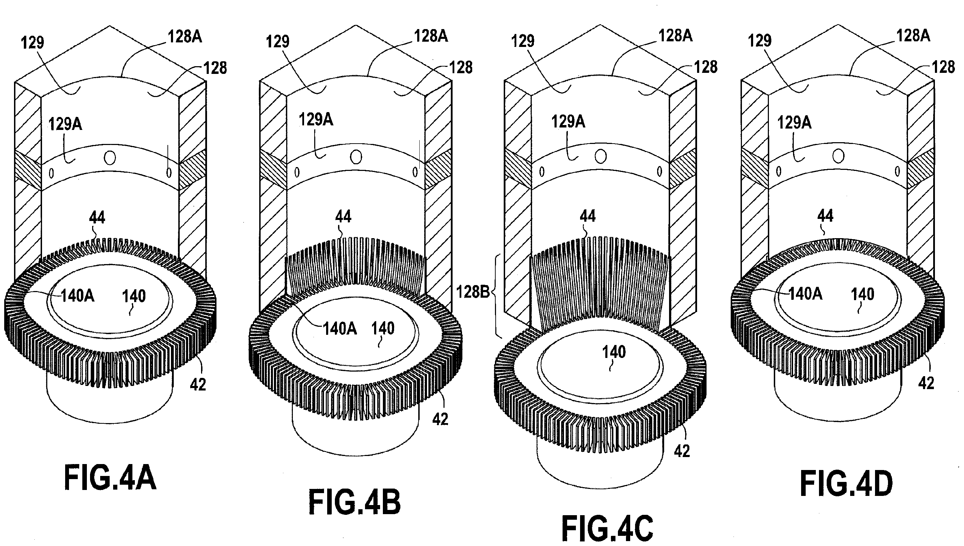

On décrit maintenant les figures 4A à 4D. Elles représentent une portion d'une chambre de thermoformage, en vue analogue à celles des figures 2A à 2C, mais la variante représentée se distingue de celle qui a été précédemment décrite en référence aux figures par le fait que l'ensemble de rainurage comprend une multiplicité d'ailettes 42 réparties uniformément sur la circonférence 140A du fond 140 et engagées dans une multiplicité d'entailles 44 également réparties uniformément, sur la surface interne du tronçon d'extrémité 128B de la chambre 128. Les épaisseurs des ailettes et les largeurs des entailles peuvent être du même ordre de grandeur que ce qui a été indiqué précédemment. Les ailettes forment, sur le pourtour 140A du fond 140, une couronne régulière et s'engagent dans les entailles qui forment elles-mêmes une denture régulière sur le pourtour de la surface interne de la portion d'extrémité 128B de la chambre 128. Comme dans l'exemple précédemment décrit, la surface interne 129 de la chambre 128 peut comporter une portion d'aspiration 129A munie d'orifices d'aspiration. Avec cette variante, le fond 140 peut occuper plusieurs niveaux bas de thermoformage. En effet, du fait de la répartition régulière des ailettes et des entailles, quel que soit le niveau occupé par le fond dans le tronçon d'extrémité 128B, les interstices entre la surface interne de la chambre et le pourtour du fond sont faibles, de sorte que le thermoformage peut s'effectuer sans difficulté, sans pénétration non désirée de matière dans une zone non prévue à cet effet, et également sans création d'une zone d'affaiblissement dans les récipients thermoformés.

Ainsi, les figures 4A, 4B et 4C montrent trois niveaux bas de thermoformage respectifs, en l'occurrence, pour la figure 4A, un niveau plus proche de l'ouverture axiale 128A de la chambre, pour la figure 4B, un niveau intermédiaire et, pour la figure 4C, un niveau plus éloigné de l'ouverture 128A.

La figure 4D montre le fond au niveau haut de positionnement, dans lequel on voit que les ailettes 42 butent contre les bords supérieurs des entailles 44.

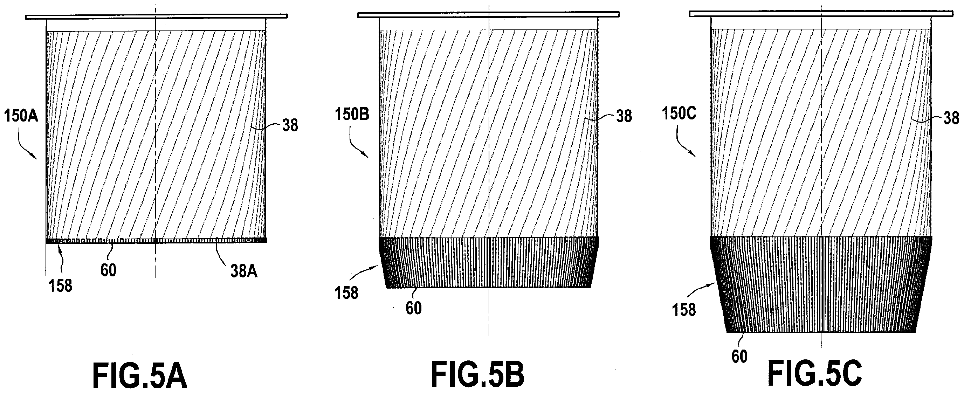

Les figures 5A à 5C montrent les récipients obtenus dans les diverses positions représentées aux figures 4A, 4B et 4C. Pour le récipient 150A de la figure 5A, les nervures 60 sont à peine perceptibles sous le bord inférieur 38A de la banderole 38, la portion d'extrémité 158 du corps du récipient étant de très faible hauteur. Pour le récipient 150B de la figure 5B, les nervures 60 sont davantage perceptibles, la portion d'extrémité 158 du corps du récipient ayant une hauteur relativement significative contrairement à celle du récipient 150A. Enfin, sur la figure 5C, la hauteur du tronçon d'extrémité 158 du récipient 150C est encore plus importante, et les nervures 60 sont donc davantage visibles. On comprend ainsi qu'on a pu, avec un même dispositif, fabriquer des récipients de contenances différentes, c'est-à-dire des récipients ayant le même pourtour, mais des corps de plus en plus profonds.

En l'occurrence, comme dans le mode de réalisation des figures 2A à 2C, le tronçon d'extrémité 128B de la chambre a des dimensions diamétrales qui vont en diminuant à mesure que l'on s'éloigne de l'ouverture axiale de cette chambre. Ainsi, la paroi des récipients 150B et 150C est inclinée dans leurs portions d'extrémité 158. Il convient toutefois de relever que ceci n'est pas indispensable, mais que le tronçon d'extrémité 128B pourrait avoir des dimensions diamétrales, définies par les bords externes des entailles (qui, considérés ensembles, définissent la surface interne du tronçon d'extrémité de la chambre), analogues à celles du reste de la chambre, et s'inscrivant sur un cylindre. Dans ce cas, plusieurs niveau bas de thermoformage pourraient être envisagés, même si un ou plusieurs ensembles de rainurage du type de ceux de la figure 2 (sans répartition homogène d'une multiplicité d'entailles et d'ailettes) étaient prévus.

Le niveau de retrait du fond 40 illustré sur la figure 2A ou du fond 140 se situe avantageusement très légèrement en-deçà du niveau haut de positionnement. Par exemple, lorsque le fond est dans cette position de retrait, seule une faible hauteur d'entaille est découverte à la périphérie interne de la chambre, par exemple environ 1 à 3 mm de hauteur d'entaille. Ainsi, et en particulier lorsque les dimensions diamétrales du tronçon d'extrémité de la chambre diminuent en s'éloignant de l'ouverture axiale de la chambre, le bord inférieur de la banderole repose, lorsque le fond est dans son niveau de retrait, sur une surface délimitant un pourtour sensiblement égale à ses dimensions diamétrales.

## Revendications

1. Dispositif pour fabriquer par thermoformage des récipients pourvus de banderoles de décor, le dispositif comprenant un bloc de moule (24, 26) présentant au moins une chambre de thermoformage (28, 128) ayant une surface interne (29, 129), une ouverture axiale (28A, 128A) et un fond mobile opposé à l'ouverture, et un bloc d'introduction de banderoles (32, 34) ayant au moins une chambre (36) d'introduction de banderole et un piston (42) mobile dans la chambre (36) d'introduction de banderole pour pousser une banderole de décor (38) dans la chambre de thermoformage (28) à travers ladite ouverture axiale (28A, 128A),
**caractérisé en ce que** le fond (40, 140) est apte à se déplacer dans un tronçon d'extrémité (28B, 128B) de la chambre (28, 128) entre un niveau haut de positionnement dans lequel il est apte à définir une butée pour le bord inférieur d'une banderole disposée dans la chambre de thermoformage et au moins un niveau bas de thermoformage, et **en ce que** le dispositif présente au moins un ensemble de rainurage comprenant une ailette (42) du fond (40, 140) engagée dans une entaille (44) de la surface interne du tronçon d'extrémité (28B, 128B).

2. Dispositif selon la revendication 1, **caractérisé en ce que** l'entaille (44) se termine au niveau haut.

3. Dispositif selon la revendication 1 ou 2, **caractérisé en ce que** la surface interne du tronçon d'extrémité (28B, 128B) de la chambre (28, 128) présente de plus grandes dimensions diamétrales (DH) au niveau haut qu'au niveau bas et la profondeur de l'entaille (44), mesurée transversalement, est plus faible au niveau haut qu'au niveau bas.

4. Dispositif selon l'une quelconque des revendications 1 à 3, **caractérisé en ce que** l'ailette (42) dépasse transversalement à partir d'un pourtour (40A, 40B) du fond (40, 140) dont les dimensions diamétrales (D40) sont analogues aux dimensions diamétrales (D28B) de la surface interne du niveau bas du tronçon d'extrémité (28B, 128B) dans laquelle est creusée l'entaille (44).

5. Dispositif selon l'une quelconque des revendications 1 à 4, **caractérisé en ce qu'**il présente une pluralité d'ensembles de rainurage (42, 44) répartis circonférentiellement.

6. Dispositif selon l'une quelconque des revendications 1 à 4, **caractérisé en ce que** l'ensemble de rainurage comprend une multiplicité d'ailettes (42) réparties uniformément sur la circonférence (140A) du fond (140) et engagées dans une multiplicité d'entailles (44) réparties uniformément sur la surface interne du tronçon d'extrémité (128B).

7. Dispositif selon l'une quelconque des revendications 1 à 6, **caractérisé en ce que** le fond (140) est apte à occuper plusieurs niveaux bas de thermoformage, pour thermoformer des récipients (150A, 150B, 150C) de différentes profondeurs.

8. Dispositif selon l'une quelconque des revendications 1 à 7, **caractérisé en ce que** l'épaisseur (e) d'une ailette (42) est comprise entre 0,3 et 1 mm et est de préférence sensiblement égale à 0,5 mm, et la largeur (l) d'une entaille (44) recevant cette ailette est égale à l'épaisseur de l'ailette, augmentée d'un jeu de l'ordre de 0,1 à 0,3 mm, de préférence sensiblement égal à 0,2 mm.

9. Dispositif selon l'une quelconque des revendications 1 à 8, **caractérisé en ce que** la surface interne (29, 129) de la chambre (28, 128) comprend une portion d'aspiration (29A, 129A) située entre le niveau haut et l'ouverture axiale (28A, 128A).

10. Procédé pour fabriquer par thermoformage des récipients pourvus de banderoles de décor, en utilisant un bloc de moule comprenant une chambre de thermoformage (28, 128) ayant une surface interne (29, 129), une ouverture axiale (28A, 128A) et un fond mobile opposé à l'ouverture, procédé dans lequel on pousse une banderole de décor (38) dans la chambre de thermoformage (28) à travers ladite ouverture axiale (28A, 128A) et on thermoforme un récipient dans la chambre de thermoformage (28, 128) en repoussant un matériau thermoplastique dans ladite chambre par ladite ouverture axiale,
**caractérisé en ce que**, avant de thermoformer le récipient dans la chambre de thermoformage, on place le fond (40, 140) dans un niveau haut de positionnement dans un tronçon d'extrémité (28B, 128B) de la chambre (28, 128) de manière à positionner la banderole dans la chambre de thermoformage en faisant coopérer la banderole avec au moins une ailette (42) du fond (40, 140) engagée dans une entaille (44) de la surface interne du tronçon d'extrémité (28B, 128B), puis on place le fond dans un niveau bas de thermoformage pour thermoformer le récipient.

11. Procédé selon la revendication 10, **caractérisé en ce que**, avant de thermoformer le récipient dans la chambre de thermoformage, on place le fond (40, 140) dans un niveau bas de retrait, on pousse la banderole de décor (38) dans la chambre de thermoformage (28) à travers ladite ouverture axiale (28A, 128A) jusqu'à ce que le bord (38A) de la banderole (38) tourné vers le fond parvienne au niveau de l'ailette (42), puis on déplace le fond (40, 140) en l'amenant au niveau haut de positionnement de manière à positionner la banderole (38) dans la chambre de thermoformage.

12. Procédé selon la revendication 10 ou 11, **caractérisé en ce que**, après avoir positionné la banderole de décor (38), on maintient la banderole en position contre la surface interne de la chambre de thermoformage, en particulier par aspiration.

13. Procédé selon l'une quelconque des revendications 10 à 12, **caractérisé en ce que** l'on place le fond (140) dans différents niveaux bas de thermoformage, pour thermoformer des récipients (150A, 150B, 150C) de différentes profondeurs.

## Patentansprüche

1. Vorrichtung zum Herstellen von mit Zierbanderolen versehenen Behältern mittels Warmformen, wobei die Vorrichtung einen Formblock (24, 26), der wenigstens eine Warmformkammer (28, 128) mit einer Innenfläche (29, 129), einer axialen Öffnung (28A, 128A) und einem beweglichen Boden gegenüber der Öffnung aufweist, sowie einen Block zum Einführen von Banderolen (32, 34) umfasst, der wenigstens eine Kammer (36) zum Einführen einer Banderole und einen Kolben (42) aufweist, welcher in der Kammer (36) zum Einführen einer Banderole beweglich ist, um eine Zierbanderole (38) durch die axiale Öffnung (28A, 128A) in die Warmformkammer (28) zu drücken,
**dadurch gekennzeichnet, dass** der Boden (40, 140) geeignet ist, sich in einem Endabschnitt (28B, 128B) der Kammer (28, 128) zwischen einer oberen Positionierungsebene, in der er geeignet ist, einen Anschlag für den unteren Rand einer in der Warmformkammer angeordneten Banderole zu definieren, und wenigstens einer unteren Warmformebene zu bewegen, und dass die Vorrichtung wenigstens eine Rillenanordnung aufweist, die eine Rippe (42) des Bodens (40, 140) umfasst, welche in eine Kerbe (44) der Innenfläche des Endabschnitts (28B, 128B) eingreift.

2. Vorrichtung nach Anspruch 1, **dadurch gekennzeichnet, dass** die Kerbe (44) auf der oberen Ebene endet.

3. Vorrichtung nach Anspruch 1 oder 2, **dadurch gekennzeichnet, dass** die Innenfläche des Endabschnitts (28B, 128B) der Kammer (28, 128) auf der oberen Ebene größere diametrale Abmessungen (DH) aufweist als auf der unteren Ebene und die Tiefe der Kerbe (44), quer gemessen, auf der oberen Ebene geringer als auf der unteren Ebene ist.

4. Vorrichtung nach einem der Ansprüche 1 bis 3, **dadurch gekennzeichnet, dass** die Rippe (42) von einem Umfang (40A, 40B) des Bodens (40, 140), dessen diametrale Abmessungen (D40) zu den diametralen Abmessungen (D28B) der Innenfläche der unteren Ebene des Endabschnitts (28B, 128B), in dem die Kerbe (44) ausgebildet ist, analog sind, quer hervorsteht.

5. Vorrichtung nach einem der Ansprüche 1 bis 4, **dadurch gekennzeichnet, dass** sie mehrere in Umfangsrichtung verteilte Rillenanordnungen (42, 44) aufweist.

6. Vorrichtung nach einem der Ansprüche 1 bis 4, **dadurch gekennzeichnet, dass** die Rillenanordnung eine Vielzahl von Rippen (42) umfasst, die über den Umfang (140A) des Bodens (140) gleichmäßig verteilt sind und in eine Vielzahl von Rippen (44) eingreifen, welche über die Innenfläche des Endabschnitts (128B) gleichmäßig verteilt sind.

7. Vorrichtung nach einem der Ansprüche 1 bis 6, **dadurch gekennzeichnet, dass** der Boden (140) geeignet ist, mehrere untere Warmformebenen einzunehmen, um Behälter (150A, 150B, 150C) mit unterschiedlichen Tiefen warmzuformen.

8. Vorrichtung nach einem der Ansprüche 1 bis 7, **dadurch gekennzeichnet, dass** die Dicke (e) einer Rippe (42) im Bereich zwischen 0,3 und 1 mm liegt und vorzugsweise im Wesentlichen gleich 0,5 mm beträgt, und die Breite (I) einer Kerbe (44), die diese Rippe aufnimmt, gleich der Dicke der Rippe ist, erhöht um ein Spiel in der Größenordnung von 0,1 bis 0,3 mm, vorzugsweise im Wesentlichen gleich 0,2 mm beträgt.

9. Vorrichtung nach einem der Ansprüche 1 bis 8, **dadurch gekennzeichnet, dass** die Innenfläche (29, 129) der Kammer (28, 128) einen Saugabschnitt (29A, 129A) aufweist, der zwischen der oberen Ebene und der axialen Öffnung (28A, 128A) gelegen ist.

10. Verfahren zum Herstellen von mit Zierbanderolen versehenen Behältern mittels Warmformen, unter Verwendung eines Formblocks, der eine Warmformkammer (28, 128) mit einer Innenfläche (29, 129), einer axialen Öffnung (28A, 128A) und einem beweglichen Boden gegenüber der Öffnung aufweist, Verfahren, bei dem eine Zierbanderole (38) durch die axiale Öffnung (28A, 128A) in die Warmformkammer (28) gedrückt wird und ein Behälter in der Warmformkammer (28, 128) warmgeformt wird, indem ein thermoplastisches Material über die axiale Öffnung in die Kammer gedrückt wird,
**dadurch gekennzeichnet, dass** vor dem Warmformen des Behälters in der Warmformkammer der Boden (40, 140) in einer oberen Positionierungsebene in einem Endabschnitt (28B, 128B) der Kammer (28, 128) positioniert wird, um die Banderole, unter Zusammenwirkenlassen der Banderole mit wenigstens einer Rippe (42) des Bodens (40, 140), welche in eine Kerbe (44) der Innenfläche des Endabschnitts (28B, 128B) eingreift, in der Warmformkammer anzuordnen, anschließend der Boden in einer unteren Warmformebene angeordnet wird, um den Behälter warmzuformen.

11. Verfahren nach Anspruch 10, **dadurch gekennzeichnet, dass** vor dem Warmformen des Behälters in der Warmformkammer der Boden (40, 140) in einer unteren Rückzugsebene angeordnet wird, die Zierbanderole (38) durch die axiale Öffnung (28A, 128A) in die Warmformkammer (28) gedrückt wird, bis der zum Boden gewandte Rand (38A) der Banderole (38) die Ebene der Rippe (42) erreicht, dann der Boden (40, 140) bewegt wird, indem er auf die obere Positionierungsebene gebracht wird, um die Banderole (38) in der Warmformkammer zu positionieren.

12. Verfahren nach Anspruch 10 oder 11, **dadurch gekennzeichnet, dass** nach dem Positionieren der Zierbanderole (38) die Banderole an der Innenfläche der Warmformkammer, insbesondere durch Ansaugen, in Position gehalten wird.

13. Verfahren nach einem der Ansprüche 10 bis 12, **dadurch gekennzeichnet, dass** der Boden (140) in unterschiedlichen Warmformebenen angeordnet wird, um Behälter (150A, 150B, 150C) mit unterschiedlichen Tiefen warmzuformen.

## Claims

1. A device for manufacturing receptacles provided with decorative wrap-around labels by thermoforming, the device including a mold block (24, 26) having at least one thermoforming chamber (28, 128) that has an inside surface (29, 129), an axial opening (28A, 128A), and a moving end-wall, opposite from the opening, and a wrap-around label insertion block (32, 34) having at least one wrap-around label insertion chamber (36) and a piston (42) mounted to move in the wrap-around label insertion chamber (36) to push a decorative wrap-around label (38) into the thermoforming chamber (28) through said axial opening (28A, 128A);
said device being **characterized in that** the end-wall (40, 140) is suitable for moving in an end segment (28B, 128B) of the chamber (28, 128) between a positioning high level in which said end wall is able to define an abutment for the lower edge of a wrap-around label placed in the thermoforming chamber and at least one thermoforming low level, and **in that** the device has at least one tongue-and-groove set comprising a fin (42) on the end-wall (40, 140) that is engaged in a notch (44) in the inside surface of the end segment (28B, 128B).

2. A device according to claim 1, **characterized in that** the notch (44) ends at the high level.

3. A device according to claim 1 or claim 2, **characterized in that** the inside surface of the end segment (28B, 128B) of the chamber (28, 128) has diametrical dimensions (DH) that are larger at the high level than at the low level, and the depth of the notch (44), as measured transversely, is smaller at the high level than at the low level.

4. A device according to any one of claims 1 to 3, **characterized in that** the fin (42) projects transversely from an outline (40A, 40B) of the end-wall (40, 140) having diametrical dimensions (D40) that are analogous to the diametrical dimensions (D28B) of the inside surface of the low level of the end segment (28B, 128B) in which the notch (44) is formed.

5. A device according to any one of claims 1 to 4, **characterized in that** it has a plurality of tongue-and-groove sets (42, 44) distributed circumferentially.

6. A device according to any one of claims 1 to 4, **characterized in that** the tongue-and-groove set comprises a multiplicity of fins (42) distributed uniformly over the circumference (140A) of the end-wall (140) and engaged in a multiplicity of notches (44) distributed uniformly over the inside surface of the end segment (128B).

7. A device according to any one of claims 1 to 6, **characterized in that** the end-wall (140) is suitable for taking up a plurality of thermoforming low levels, for thermoforming receptacles (150A, 150B, 150C) that are of different depths.

8. A device according to any one of claims 1 to 7, **characterized in that** the thickness (e) of a fin (42) lies in the range 0.3 mm to 1 mm, and is preferably substantially equal to 0.5 mm, and the width (ℓ) of a notch (44) receiving said fin is equal to the thickness of the fin, plus clearance of approximately in the range 0.1 mm to 0.3 mm, and preferably substantially equal to 0.2 mm.

9. A device according to any one of claims 1 to 8, **characterized in that** the inside surface (29, 129) of the chamber (28, 128) includes a suction portion (29A, 129A) situated between the high level and the axial opening (28A, 128A).

10. A method of manufacturing receptacles provided with decorative wrap-around labels by thermoforming, by using a mold block including a thermoforming chamber (28, 128) having an inside surface (29, 129), an axial opening (28A, 128A), and a moving end-wall opposite from the opening, which method comprises pushing a decorative wrap-around label (38) into the thermoforming chamber (28) through said axial opening (28A, 128A), and thermoforming a receptacle in the thermoforming chamber (28, 128) by pushing a thermoplastic material into said chamber via said axial opening;
said method being **characterized in that**, prior to thermoforming the receptacle in the thermoforming chamber, the method further comprises placing the end-wall (40, 140) at a positioning high level in an end segment (28B, 128B) of the chamber (28, 128) in such a manner as to position the wrap-around label in the thermoforming chamber by causing the wrap-around label to co-operate with at least one fin (42) on the end-wall (40, 140) that is engaged in a notch (44) in the inside surface of the end segment (28B, 128B), and then placing the end-wall at a thermoforming low level for thermoforming the receptacle.

11. A method according to claim 10, **characterized in that**, prior to thermoforming the receptacle in the thermoforming chamber, the method further comprises placing the end-wall (40, 140) at a retracted low level, pushing the decorative wrap-around label (38) into the thermoforming chamber (28) through said axial opening (28A, 128A) until the edge (38A) of the wrap-around label (38) that is facing towards the end-wall reaches the level of the fin (42), and then moving the end-wall (40, 140) by bringing it to the positioning high level in such a manner as to position the wrap-around label (38) in the thermoforming chamber.

12. A method according to claim 10 or claim 11, **characterized in that**, after positioning the decorative wrap-around label (38), the method further comprises holding the wrap-around label in position against the inside surface of the thermoforming chamber, in particular by suction.

13. A method according to any one of claims 10 to 12, **characterized in that** it further comprises placing the end-wall (140) at various different thermoforming low levels, for thermoforming receptacles (150A, 150B, 150C) that are of different depths.
